# EUROPEAN PATENT APPLICATION

(11) **EP 1 936 549 A1**
(43) Date of publication of application: **25.06.2008**
(21) Application number: 06126414.9
(22) Date of filing: 18.12.2006
(51) Int. Cl.: G06Q 10/00

(54) **System and method for associating items from a group with features provided by a mobile device**

(71) Applicant: Research In Motion Limited, Waterloo, Ontario N2L 3W8 (CA)
(72) Inventor: Somani, Zaheen, Richmond Ontario V7C 2P3 (CA); Scott, Sherryl Lee Lorraine, Toronto Ontario M5T 1Y4 (CA)
(74) Representative: Rickard, David John

(57) **Abstract**

A computer application is provided for associating items such as contacts with features, in a mobile device. An input mechanism such as an entry box enables a user to begin entering identifying characters, which causes a sub-list of related items to be displayed in a pop-up list box. The user may then select a desired item from the sub-list, directly from the screen in which the entry box is displayed thereby avoiding navigation through additional menus. The input mechanism can be applied to features such as creating an exception for selected contacts, creating groups of contacts, e.g. for email, and for creating song play lists.

## Description

The following relates generally to a system and method for associating items from a group with features provided by a mobile device.

Computer applications are typically accessible to a user via an operating system of a computing device. The applications are either stored directly on the device or loaded via a portal, e.g. a web browser etc. Most often, the applications are loaded by selecting an icon presented on a display using an selection tool such as a mouse or toggle button. The icons and applications themselves can be organized into folders and the organization can be visualized on one or more screens.

The organization of the applications (and associated icons) can involve moving, grouping, deleting, adding etc. Options for adding and removing features and associated information with an application may also be provided. Typically these options are provided in a menu that is displayed in response to a user command. The user can scroll through the menu and if applicable, load a sub-menu to access further features associated with a general feature and/or to enter information.

The presentation of menus and sub-menus can often require loading new screens and when sub-menus are accessed, further screens are loaded. If the user is forced to navigate through these menus they may become confused or forget what they originally intended to do. When an unfamiliar or seemingly unrelated menu appears, the user may choose to exit the menu entirely because they feel they have done something incorrect. For mobile devices, where the displays are relatively small and the interface mechanisms more limited, these concerns can be exacerbated.

It is therefore an object of the following to obviate or mitigate at least one of the above disadvantages.

### BRIEF DESCRIPTION OF THE DRAWINGS

Embodiments will now be described by way of example only with reference to the appended drawings wherein:

Figure 1 is a schematic diagram of a mobile device and a display output therefor.

Figure 2 is a screen shot of a contacts screen.

Figure 3 is a screen shot of a profiles screen.

Figure 4 is a series of screen shots illustrating one way for creating an exception.

Figure 5 is a series of screen shots illustrating another way for creating an exception.

Figure 6 is a series of screen shots illustrating the creation of an email group.

Figure 7 is a series of screen shots illustrating the creation of a song play list.

Figure 8 is a schematic block diagram of components of the mobile device of Figure 1.

Figure 9 is a schematic block diagram of the memory shown in Figure 8.

### DESCRIPTION OF PREFERRED EMBODIMENTS

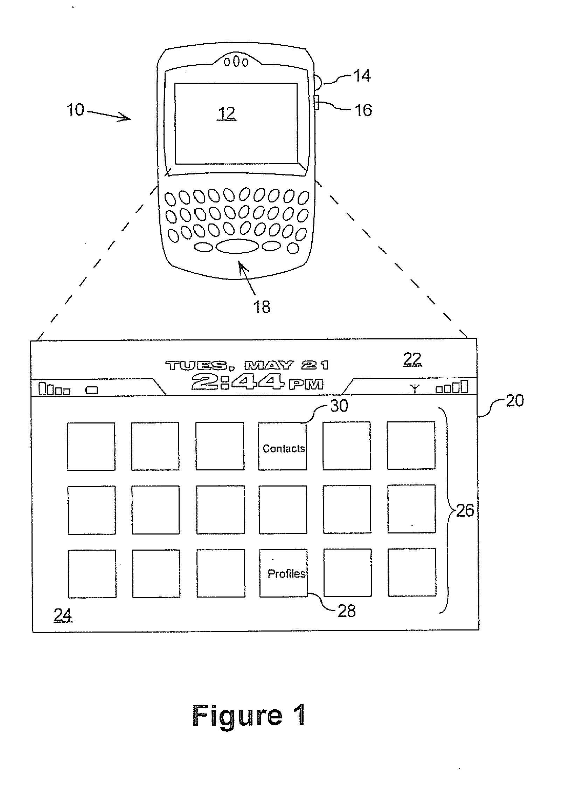

Referring first to Figure 1, a mobile device 10 is shown. The mobile device 10 generally comprises a display 12 and a cursor of view positioning device 14, such as a positioning wheel (as shown) or a trackball (not shown). A wide range of one or more positioning or cursor/view positioning mechanisms such as a touch pad, a joystick button, a mouse, a touchscreen, a tablet or other whether presently known or unknown may be employed. The mobile device 10 also comprises an escape or cancel button 16 and a keyboard 18. In this example, the keyboard 18 is disposed on the front face of the mobile device housing and positioning device 14 and cancel button 16 are disposed at the side of the housing. The keyboard 18 is in this example a standard QWERTY keyboard but instead a reduced QWERTY keyboard may instead be employed.

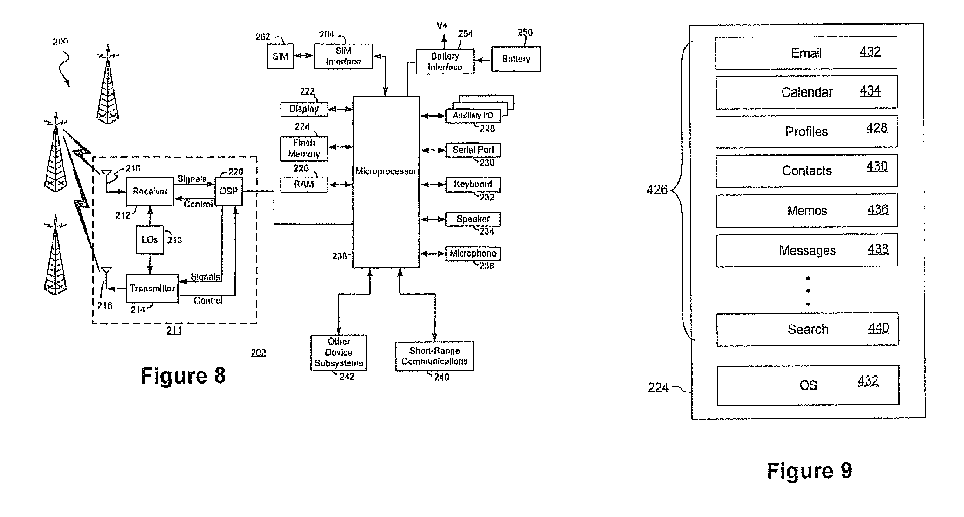

Positioning device 14 may serve as another input member and is both rotatable to provide selection inputs to the processor 238 (see Figure 8) and can also be pressed in a direction generally toward housing to provide another selection input to the processor 238. The display 12 may include a cursor (not shown) that depicts generally where the next input or selection will be received.

It will be appreciated that the mobile device 10 shown in Figure 1 is for illustrative purposes only and various other mobile devices are equally applicable to the following examples.

Figure 8 is a detailed block diagram of a preferred mobile station 202 of the present disclosure. The term "mobile station" will herein refer to the operable components of, e.g. mobile device 10. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities) - e.g. mobile device 10 shown in Figure 1. Mobile station 202 may communicate with any one of a plurality of fixed transceiver stations 200 within its geographic coverage area.

Mobile station 202 will normally incorporate a communication subsystem 211 which includes a receiver 212, a transmitter 214, and associated components such as one or more (preferably embedded or internal) antenna elements 216 and 218, local oscillators (LOs) 213, and a processing module such as a digital signal processor (DSP) 220. As will be apparent to those skilled in field of communications, particular design of communication subsystem 211 depends on the communication network in which mobile station 202 is intended to operate.

Mobile station 202 may send and receive communication signals over a network after required network registration or activation procedures have been completed. Signals received by antenna 216 through the network are input to receiver 212, which may perform such common receiver functions as signal amplification, frequency down conversion. filtering, channel selection, and like, and in example shown in Figure 8, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile station 202, and therefore mobile station 202 requires a Subscriber Identity Module or "SIM" card 262 to be inserted in a SIM interface 264 in order to operate in the network. SIM 262 is one type of a conventional "smart card" used to identify an end user (or subscriber) of the mobile station 202 and to personalize the device, among other things. Without SIM 262, the mobile station terminal is not fully operational for communication through a wireless network. By inserting SIM 262 into mobile station 202, an end user can have access to any and all of his/her subscribed services. SIM 262 generally includes a processor and memory for storing information. Since SIM 262 is coupled to a SIM interface 264, it is coupled to microprocessor 238 through communication lines. In order to identify the subscriber, SIM 262 contains some user parameters such as an International Mobile Subscriber Identity (IMSI). An advantage of using SIM 262 is that end users are not necessarily bound by any single physical mobile station. SIM 262 may store additional user information for the mobile station as well, including datebook (or calendar) information and recent call information.

Mobile station 202 is a battery-powered device so it also includes a battery interface 254 for receiving one or more rechargeable batteries 256. Such a battery 256 provides electrical power to most if not all electrical circuitry in mobile station 202, and battery interface 254 provides for a mechanical and electrical connection for it. The battery interface 254 is coupled to a regulator (not shown) which provides a regulated voltage V to all of the circuitry.

Mobile station 202 includes a microprocessor 238 which controls overall operation of mobile station 202. Communication functions, including at least data and voice communications are performed through communication subsystem 211. Microprocessor 238 also interacts with additional device subsystems such as a display 222, a flash memory 224, a random access memory (RAM) 226, auxiliary input/output subsystems 228, a serial port 230, a keyboard 232, a speaker 234, a microphone 236, a short-range communications subsystem 240, and any other device subsystems generally designated at 242. Some of the subsystems shown in Figure 8 perform communication-related functions, whereas other subsystems may provide "resident" or on-device functions. Notably, some subsystems such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, as well as the inventive functionality of the present disclosure, will normally be installed on mobile station 202 during its manufacture. A preferred application that may be loaded onto mobile station 202 may be a personal information manager (PIM) application having the ability to organize and manage data items relating to user such as, but not limited to, e-mail, calendar events, voice mails, appointments, and task items. Naturally, one or more memory stores are available on mobile station 202 and SIM 262 to facilitate storage of PIM data items and other information.

The PIM application preferably has the ability to send and receive data items via the wireless network. In the present disclosure, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network, an auxiliary subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

In a data communication mode, a received signal such as a text message, an e-mail message, or web page download will be processed by communication subsystem 211 and input to microprocessor 238. Microprocessor 238 will preferably further process the signal for output to display 222 or alternatively to auxiliary I/O device 228. A user of mobile station 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in Figure 8 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure 15 device communication.

Short-range communications subsystem 240 of Figure 8 is an additional optional component which provides for communication between mobile station 202 and different systems or devices, which need not necessarily be similar devices. For example, subsystem 240 may include an infrared device and associated circuits and components, or a Bluetooth^{™} communication module to provide for communication with similarly enabled systems and devices. Bluetooth^{™} is a registered trademark of Bluetooth SIG, Inc.

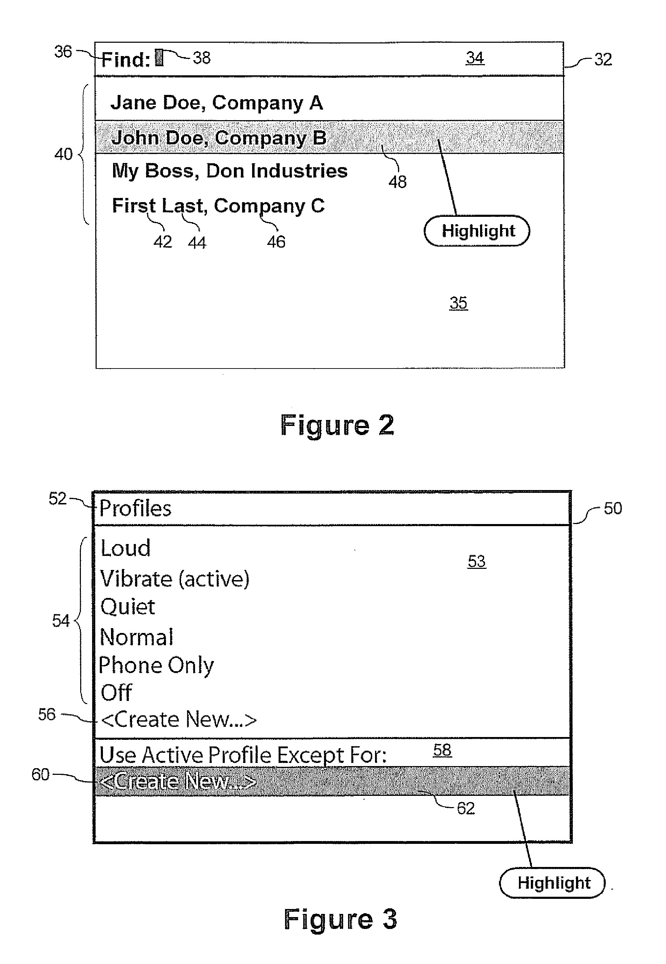

Turning back to Figure 1, the mobile device 10 displays an application screen 20 that includes a status region 22 and an application portion 24 that displays a series of icons 26 for accessing each visible application available for use on the mobile device 10 for providing features to the user. A visible application is generally one that has not been hidden by the user. The series of icons 26 comprises a profiles icon 28 and a contacts icon 30. Selection of the contacts icon 30 opens a contacts screen 32, shown in Figure 2, and selection of the profiles icon 28 opens a profiles screen 50, shown in Figure 3. One or more of the series of icons 26 may be a folder (not shown) that itself is capable of organizing any number of applications or files therewithin.

As shown in Figure 9, memory 224 includes a plurality of applications 426 associated with the series of icons 26 for the processing of data. Applications 426 may be any variety of forms such as, without limitation, software, firmware, and the like. Applications 426 may include, for example, a contacts application 430 (also referred to commonly as an address book), a profiles application 428, electronic mail (e-mail) 432, calendar program 434, memo program 436, messages 438, search 440 etc. An operating system (OS) 432 also resides in memory 224. The mobile device 10 of the present disclosure is also adapted to enable communication between different ones of the applications, e.g. between profiles 428 and contacts 430 such that items stored in the device 10 for use with one application can be searched, filtered and indicators therefor displayed for the user so that a look-up function can be performed directly within the other application without requiring the loading of a sub-menu.

In Figure 1, the "home" screen output is currently active and constitutes the main "ribbon" application for displaying the icons 26 shown. An application, such as profiles application 428 of Figure 9 may then be initiated (opened or viewed) from display by providing a suitable user input to it. For example, contacts application 428 may be initiated (opened or viewed) by rotating positioning device 14 to highlight contacts and providing a selection input by translating positioning device 14.

Movement, navigation, and/or scrolling with use of a cursor/view positioning mechanism is beneficial given the relatively large size of visually displayed information and the compact size of display 12, and since information and messages are typically only partially presented in the limited view of display 12 at any given moment. As previously described, positioning device 14 is one helpful cursor/view positioning mechanism to achieve such movement. Positioning device 14, which may be referred to as a scrollwheel or scroll device, specifically includes a circular disc which is rotatable about a fixed axis of housing and may be rotated by the end user's index finger or thumb. When the information or message is being partially displayed. an upwards rotation of positioning device 14 causes an upwards scrolling such that display 12 presents viewing of an upper portion of the information or message. Similarly, a downwards rotation of positioning device 14 causes a downwards scrolling such that display 12 presents viewing of a lower portion of the information or message. Positioning device 14 is mounted along a fixed linear axis such that the end user can depress positioning device 14 inwards toward housing for selection of information.

Referring now to Figure 2, the contacts screen 32 includes a find input field 34 and a contacts list portion 35. The find input field 34 is preferably a search tool that filters a list of items in a group of items to create a sub-list of items that can be associated with identifying information related to, e.g. what is entered by the user. The find tool 34 comprises a label 36 and an entry bar 38. By entering a first name 42, last name 44 or company/affiliation name 46, a search through a list of contacts 40 can be made for the desired contact. Alternatively, the user may scroll through the list 40 using the scroll device 14, which places a highlighted bar 48 over one contact at a time. Selection of the desired contact then enables the user to access the contact details (not shown). The contact details may include telephone numbers (mobile, home, business etc.), addresses, names, fax numbers, email addresses and any other information that can be associated with the contact.

Referring to Figure 3, the profiles screen 50 comprises a label 52, a profiles list 53 and an exceptions list 58. The profiles list 53 comprises a list of user selectable profiles 54, and preferably, an option 56 for creating a new profile. Each profile defines how the mobile device 10 will notify the user of incoming email messages, text messages, phone calls etc. For example, the "quiet" profile suppresses both sound and vibration, and the "phone only" profile suppresses the sound and vibration for every incoming signal except a phone signal.

The exceptions list 58 lists any contact person that the user may wish to distinguish from the other contacts. For example, a different ring tone can be associated with that contact, or vibration can be added to the ring only for that contact. When a message, phone call etc. comes into the device 10 from any contact that is not in the exceptions list 58 (or those who are not in the contacts list 40) the active profiles as defined in the profiles list 53 is typically used by default. When a message, phone call etc. comes in that can be correlated to a contact that has been placed in the exceptions list 58, a profile specific to that contact can be used rather than the default or active profile. The user can select a profile 54 or a "create new exception" option 60 by scrolling and selecting the desired text for that option with a highlighting bar 62.

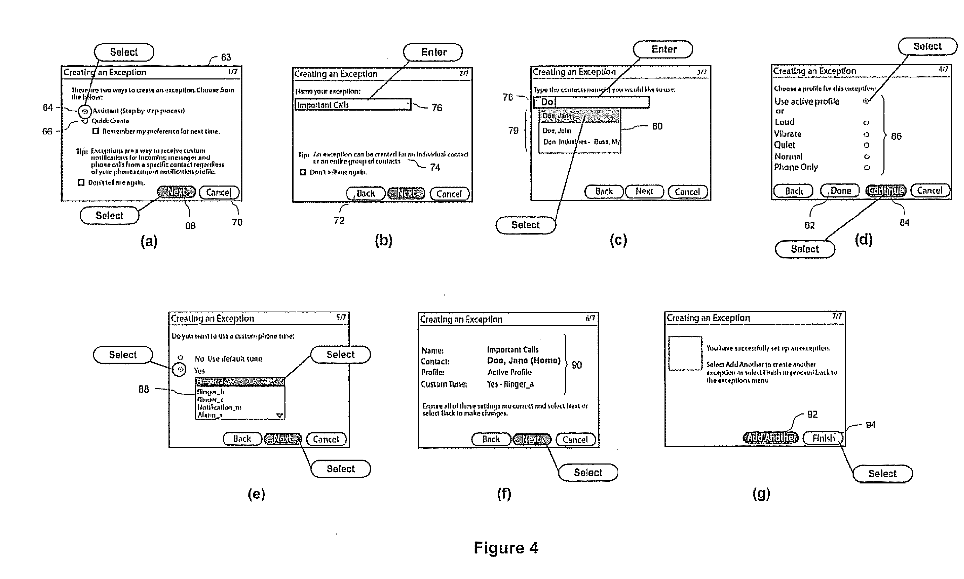

By selecting the create new option 60, a create exception application 63 is loaded by the processor 238 and displayed as shown in Figure 4, screen (a). The application 63 is part of the profiles application 428 in this example, however it will be appreciated that it may be its own application. The methods performed by the application 63 are controlled by the mobile device 10 and its mobile station 202 components as described above.

In this example, the create exception application 63 provides both a step-by-step assistant option 64 and a quick create option 66. The assistant option 64 takes the user through each step in order to enable them to completely customize the profile for the new exception that is to be created. The quick create option 66 enables the user to forego the learning process offered in the assistant option 64 by enabling the user to select the options from a single convenient list as described below. Preferably, previous or default settings are "pre-selected" and the user can choose to alter these settings or leave them as they are. In this way, the user only needs to modify the particular options for the exception that they wish to be different from other exceptions, such as a custom ring tone. As can be seen in screen (a) of Figure 4, a "Next" button 68 is provided for advancing the process, and a "Cancel" button 70 for cancelling the process so as to forego saving the new exception. In this example, the user selects the step-by-step assistant option 64 and then selects the next button 68 to continue the process.

The user is preferably provided with an opportunity to name the new exception by entering such name in an entry box 76, seen in screen (b) of Figure 4. Optionally, the application 63 can present a tip 74 to the user regarding the process. For example, the tip 74 shown in screen (b) informs the user that they may associate an exception with a group of contacts as well as an individual contact. A process for creating a group of contacts is described in greater detail later. Preferably, a "Back" button 72 is provided for screens such as screen (b) that are not the first screen. This enables the user to go back a step and modify their settings if so desired. In this example, the name "Important Calls" the exception and selects the next button 68 to continue the process. The processor 238 receives a user input via the keyboard interface 232 and associates the input with the exception that is to be created and stored in memory 224.

The assistant option 64 continues by enabling the user to enter the contact or group of contacts that they wish to associate with the exception as shown in screen (c). Traditionally, to associate a contact or other item from a group to a feature such as an exception, a sub-menu similar to the contacts screen 32 is accessed and displayed by the processor 238. The user would then search for or scroll to and select an item or sub-group of items and then the display would return to the feature being modified. Rather than navigate through submenus, the assistant option 64 provides an input mechanism that directly filters and displays a sub-list of items 79 as one or more identifiers are entered. In this example, the input mechanism is an entry box 78 and the identifiers are characters that are associated with a desired contact, e.g. first name 42, last name 44, company name 46 etc. As the user types the characters that are believed to be related to the desired contact, the processor 238 receives the characters as an input from the keyboard interface 232, and accesses the contacts application 430 to obtain items stored in that application 430. A pop-up list box 80 is preferably displayed by the microprocessor 238, that contains any contact that can be identified or is associated with the entered identifiers (sub-list 79). The microprocessor 238 therefore uses the identifiers to search within the stored items of the contacts application 430 to determine which ones should form the sub-list 79. This effectively integrates a look-up function into the exception application 63, which is in turn part of the profiles application 428.

As can be seen in screen (c), when the user types in the characters "D-o", three related contacts, namely Jane Doe, John Doe, and My Boss from Don Industries populate the list box 80 to create a sub-list of items 79 related to the identifiers entered into the entry box 78. Preferably, when the user selects the entry box 78 using an appropriate input device provided by the mobile device 10, and prior to any characters being entered, the processor 238 accesses all contacts from the contacts program 430 and populates the list box 80 such that it displays each and every contact that is stored on the mobile device (i.e. all members of the group of items). In this way, the user may scroll through the entire list when they cannot decide on a particular contact, or cannot recall the manner in which that contact is identified in their device 10. For example, the user's mother may be entered under "Mom" rather then in a first name 42/last name 44 format and in order to determine this, they may scroll through the entire list rather than attempting each variation.

As the group is filtered by the processor 238 to create the sub-list 79, the user can at any time scroll, highlight and select a desired item, in this example a desired contact for the new exception as shown in screen (d), which then preferably displays the entire contact name in the entry box 78 and enables the user to add the contact by selecting the next button 68. Alternatively, selection of the contact in the sub-list 79 may instead cause the processor 238 to load the next screen on the display 12.

Once the contact has been added, the application 63 proceeds to screen (d), which enables the user to select a profile to associate with the exception and in turn the contact. In this example, a number of profiles 86 are listed and the active profile (preferably selected as a default profile) is selected. The active profile (which can also be changed outside of the exception application 63) is then used when a phone call, email, text message etc. comes in and can be identified as originating from the selected contact, in this example, Jane Doe. A "Continue" button 84 is preferably provided to enable the user to continue selecting the various options for the new exception, and a "Done" button 82 to enable the user to finalize the exception. If the user selects the done button 82, default settings are preferably added for the other options that may be available.

In this example, the user selects the continue button 84, which then displays screen (e), which is used to select a custom ring tune or tone 88 if so desired. As can be seen from screen (e), the user can choose to use the default ring tone or, as shown, can select to associate a custom ring tone 88, e.g. Ringer_a. In this way, when a phone call is identified as originating from a number associated with Jane Doe, Ringer_a will be played rather than the predefined tune that has been selected for other incoming calls. By selecting a specific ring tune 88 and selecting the next button 68, screen (f) is displayed, which provides a summary 90 of selected options. If the user wishes to make a change, they can select the back button 72. If the user is satisfied with the selected options, they may select the next button 68 as shown in screen (f), and screen (g) is then loaded.

Screen (f) provides an acknowledgment message regarding the newly created exception. Preferably, an "Add Another" button 92 is provided, which enables the user to return to screen (a) or screen (b) to begin the process again.

The methods described above may be embodied in a computer program product comprising a computer readable medium and computer instructions stored in the computer readable medium which are executable by one or more processors, e.g., the processor 238 of the mobile station 202. In particular, the methods may be executable on the mobile device 10 which has a wireless transmitter 214 and receiver 212; one or more processors coupled to the wireless transmitter 214 and receiver 212; and a user interface such as that described above; wherein the one or more processors are operative to execute the method.

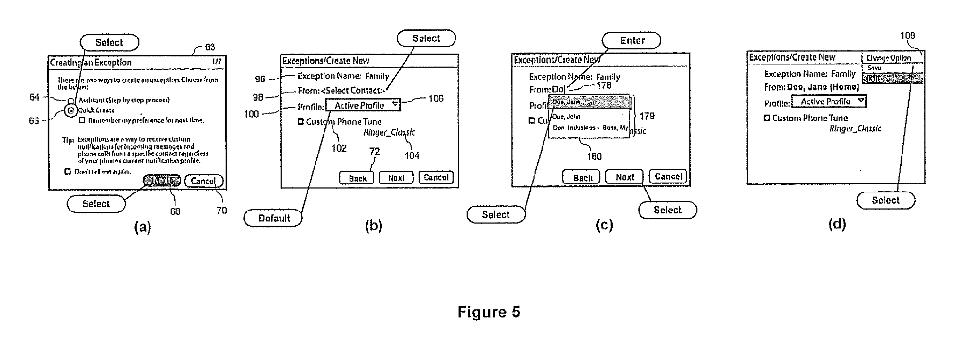

Figure 5 provides a series of screen shots associated with the quick create option 66. It can be seen in screen (a) that, similar to what was shown in Figure 4, when the user selects the quick create option 66, they can proceed by selecting the next button 68 or cancel the operation by selecting the cancel button 70. As can be seen in screen (b), by selecting the next button 68 in screen (a), a one-screen selection menu is then loaded by the processor 238. The selection menu in this example provides a user-definable name entry 96, a contact selection input mechanism 98, a profile type entry 100 showing the currently associated profile 106, a custom phone tune selection box 102 and an identifier 104 associated with a ring tune.

Preferably, the selection menu lists either default selections for an exception, or the previous selections chosen by the user. This may be done as a guide for the user but the selection menu should allow the user to change these settings as desired. In this example, if the box 102 is selected by the user, the menu provides the previous name 96, profile 106, and custom ring tune 104. The user may then opt to select the box 104 using, e.g. the scroll device 14, and enter a name using a similar input mechanism as described in detail above with respect to Figure 4 in order to provide the same settings as before. As seen in screen (c), an entry location 178 is provided, where upon typing the first few characters of a name or organization associated with a desired contact, the processor 238 accesses and searches through the contacts application 430 to create a filtered sub-list 179 and the sub-list 179 is displayed in a pop-up list box 180 as described above. By selecting the desired item, e.g. Jane Doe, screen (d) is displayed by the processor 238.

The user may then choose to save the settings by selecting the scroll device 14, which loads an options menu 108, may change another option, or exit without making changes. It is therefore seen that the quick create option 66 can also utilize the directly accessible filtered list 79 provided by the input mechanism (e.g. entry location 178), similar to the input mechanism shown in Figure 4 (e.g. entry box 78). Also similar to Figure 4, a back button 72 is provided when appropriate to enable the user to go back and change a setting. It will be appreciated that screen (d) may use either buttons or the options menu 108 depending on the application and preferences. The quick create option 66 should preferably be capable of enabling the user to navigate back and forth through the screens similar to the assistant option 64 so that the user can correct, change or otherwise modify their selections. Other methods could similarly be used such as scroll-type page turning or by using only screen (b) with an option to save directly without previewing as shown in screen (d). It can therefore be seen that the input mechanism can be adapted to any suitable option in the mobile device 10.

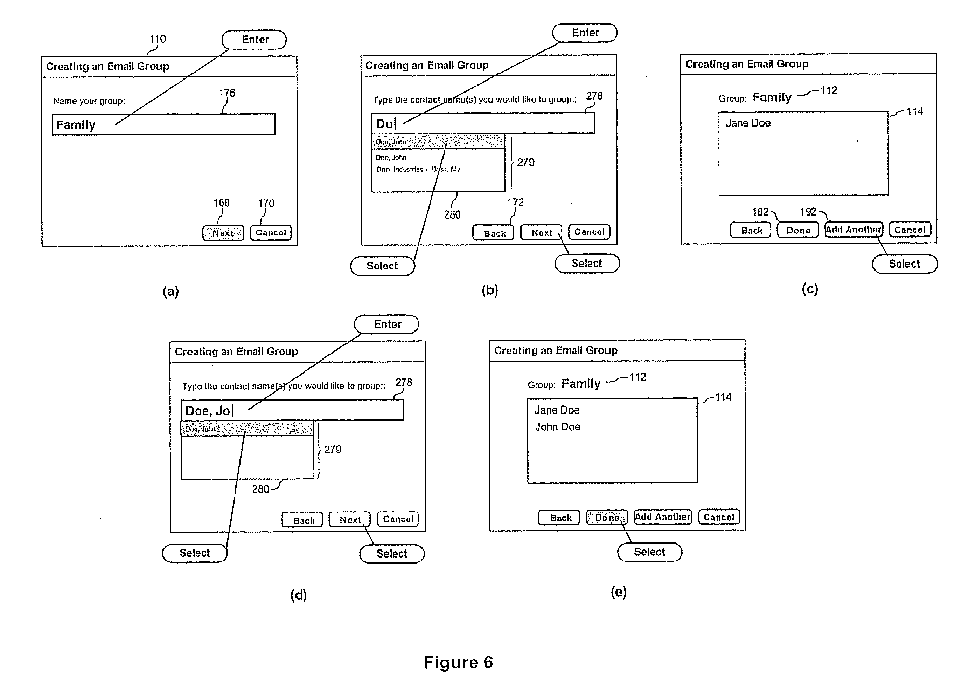

As mentioned above, the user may wish to associate a group of contacts with an exception. In order to create a group of contacts, a similar input mechanism can be used as shown in Figure 6, e.g., entry box 278. As shown in screen (a) of Figure 6, an email group creation application 110 can be used to group together contacts into an email address group (or more generally a contact group). The group creation application 110 may be accessible from within a mail application 432, within the contacts application 430, or may be its own application, accessible from the group of icons 26.

The group creation application 110 is loaded by the processor 238 and displayed similar to the other applications described above, which includes providing an entry box 176 for naming the group. The name entered by the user is then preferably stored and searchable as an individual item in the list of contacts 40. Similar to the above examples, a next button 168 and cancel button 170 are provided, as well as a back button 172, add another button 192 and done button 182 where appropriate. As can be seen in screen (b), once the group has been named, the user is prompted to begin entering the desired contact in the entry box 278, which, as before, causes the processor 238 to access and search the items in the contacts application 430, an prepare and display a filtered list 279 in a pop-up list box 280 directly within the application 110. The user may then select a desired contact and select the next button 168, which then causes the processor 238 to load and display screen (c).

In screen (c), a name label 112 is displayed along with an up to date group list box 114, which displays each and every contact that has been added to the group, e.g. "Family" in this example. The user may then choose to finish the group creation process by selecting the done button 182, or, as shown, select the add another button 192, which causes the processor 238 to load the entry screen as shown in screen (d). In screen (d), the user is now provided with the opportunity to enter a more specific string of characters (e.g. "Doe, Jo") and selects John Doe to add to the family group in a manner similar to that described above. As shown in screen (e), the list box 114 is now populated by the processor 238 with both Jane Doe and John Doe and associates these contacts with the group "Family". As such, this group is then added by the processor 238 to the list of contacts 40 by accessing the contacts application 430 in memory 224, and can be selected by the user from the sub-list 79 using an input device when appropriate, e.g. when the character series "F-A" is received as an input and processor by the processor 238.

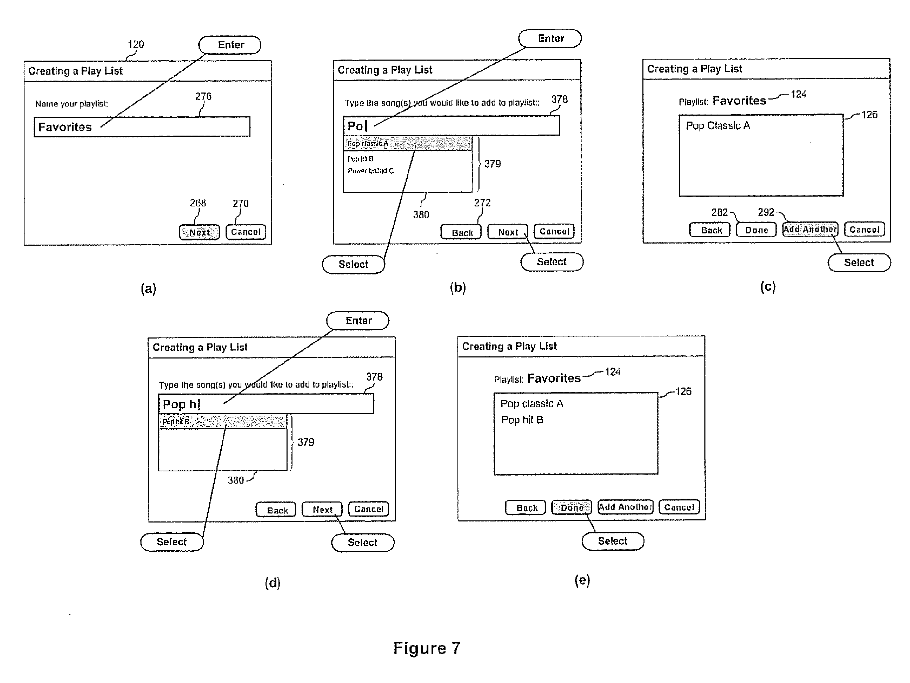

Figure 7 illustrates an application of the above described input mechanism to other features not related to contacts. In the example shown in Figure 7, a "Creating a Play List" application 120 enables a user to group a number of songs into a play list. The application 120 can be accessed from within a music program (not shown), within a folder, or can be its own application accessible via an icon 26 etc.. As can be seen in screen (a), the user is able to name the play list by entering characters into an entry box 276 and can navigate using a next button 268, cancel button 270, back button 272, done button 282 and add another button 292 where appropriate, similar to the examples provided above.

As shown in screen (b), the user can add songs to the play list using the input mechanism, in this example an entry box 378, which is similar to those described above. As the user begins to enter characters associated with the song title, artist or any other identifying information, the processor 238 accesses the music program, searches the stored music files based on the entered characters, and creates a sub-list 379 that is provided using a pop-up list box 380. The user may then view the current state of the play list in a list box 126 that identifies the play list with a label 124 as shown in screen (c), and can choose to add further songs to the play list if desired as shown in screens (d) and (e).

The screens shown in Figure 7 can also preferably be accessed at a later time to add/update a play list in addition to creating new play lists. This capability also preferably applies to the other examples shown in Figures 4-6. In this way, the input mechanism can be used not only in the creation of new features, but also to modify and update such features at a later time.

It can therefore be seen that the input mechanism 178 can be used to associate items that form part of a grouping of items, with an application in a mobile device for creating a feature. For example, an entry box 78 can be used by the user to cause the processor 238 to associate a contact with an exception as shown in Figures 4 and 5, a similar entry box 178 can be used to associate a contact with a group of contacts as shown in Figure 6, and yet another similar entry box 278 can be used to associate a song with a play list.

It will be appreciated that the examples provided herein are for illustrative purposes only and that the principles outlined above, in particular with respect to the input mechanism (e.g. boxes 78, 178, 278 and 378) can be applied to the association of any suitable item with any applicable feature in a mobile device.

It will also be appreciated that the above principles are also applicable to non-mobile devices, such as computer programs for personal computers (PCs) and should not be considered as applicable only to mobile devices.

Although the above has been described with reference to certain specific embodiments, various modifications thereof will be apparent to those skilled in the art without departing from the spirit and scope of the invention as outlined in the claims appended hereto.

## Claims

1. A method for adding an item (40) to a feature (63, 110, 120) created on a mobile device (10) comprising:
- during creation of said feature (63, 110, 120) providing an input mechanism (78, 178, 278) for entering one or more identifiers associated with said item, said item being one of a group of one or more items (40) being accessible to said mobile device (10); and
- upon entry of said one or more identifiers, displaying with said input mechanism (78, 178, 278), a filtered list (79) indicative of a sub-list of items related to said one or more identifiers;
wherein selection of a desired item from said sub-list (79) adds said desired item to said feature (63, 110, 120).

2. A method according to claim 1 wherein said item is a contact and said group of items (40) is group of contacts.

3. A method according to claim 1 or claim 2 wherein said input mechanism is an entry box (78, 178, 278) and said one or more identifiers comprise characters intended to be associated with said desired item.

4. A method according to claim 3 wherein when said entry box (78, 178, 278) is empty and said entry box (78, 178, 278) is selected, said sub-list (79) is equivalent to a list containing all items in said group of items (40).

5. A method according to any one of claims 1 to 4 wherein said feature creates an exception (63) for an active profile (54) for said device (10) and said desired item is a contact intended to be associated with said exception.

6. A method according to claim 5 wherein said active profile (54) comprises one or more options related to the manner in which said mobile device (10) alerts a user upon receiving a communication from said contact.

7. A method according to claim 6 wherein said one or more options is any one or any combination of a ring type, a notification message, an alarm, a vibration, and/or a suppression of one or more alerts associated with said active profile (54).

8. A method according to any one of claims 1 to 7 wherein said feature creates a new group of contacts (110) and said item is a contact from a group of contacts (40), and wherein said new group comprises said contact and is capable of adding additional contacts thereto.

9. A method according to claim 8 wherein said new group of contacts is for an email option.

10. A method according to any one of claims 1 to 9 wherein said feature creates a play list of songs (120) and said item is a song from a group of songs accessible by said mobile device (10), and wherein said play list (126) comprises said song and is capable of adding additional songs thereto.

11. A computer program product comprising computer readable instructions for performing the method of any one of claims 1 to 10.

12. A mobile device (10) comprising a display (12), a processor (238), and a memory (224) storing at least one computer-based application, said processor (238) being configured for creating a feature and adding an item (42) to said feature in said application by:
- displaying an input mechanism (78, 178, 278) during creation of said feature for entering one or more identifiers associated with said item, said item being one of a group of one or more items (40) being accessible to said mobile device (10); and
- displaying a sub-list (79) with said input mechanism (78, 178, 278) upon selection of said input mechanism (78, 178, 278) and entry of at least one of said one or more identifiers, said sub-list (79) comprising a filtered list indicative of items related to said at least one identifier;
wherein selection of a desired item from said sub-list (79) adds said desired item to said feature.

13. A mobile device (10) according to claim 12 wherein said item is a contact and said group of items (40) is group of contacts.

14. A mobile device (10) according to claim 12 or claim 13 wherein said input mechanism (78, 178, 278) is an entry box and said one or more identifiers comprise characters intended to be associated with said desired item.

15. A mobile device (10) according to claim 14 wherein said processor (238) is configured such that when said entry box (78, 178, 278) is empty and said entry box is selected, said sub-list (79) is equivalent to a list containing all items in said group of items (40).

16. A mobile device (10) according to any one of claims 11 to 15 wherein said processor (238) is configured for creating said feature such that said feature creates an exception (63) for an active profile (54) for said device (10) and said desired item is a contact intended to be associated with said exception.

17. A mobile device (10) according to claim 16 wherein said active profile (54) comprises one or more options related to the manner in which said mobile device (10) alerts a user upon receiving a communication from said contact.

18. A mobile device (10) according to claim 17 wherein said one or more options is any one or any combination of a ring type, a notification message, an alarm, a vibration, and/or a suppression of one or more alerts associated with said active profile (54).

19. A mobile device (10) according to any one of claims 12 to 18 wherein said processor (238) is configured for creating said feature such that said feature creates a new group of contacts (110) and said item is a contact from a group of contacts (40), and wherein said new group comprises said contact and is capable of adding additional contacts thereto.

20. A mobile device (10) according to claim 19 wherein said new group of contacts is for an email option.

21. A mobile device (10) according to any one of claims 12 to 20 wherein said processor (238) is configured for creating said feature such that said feature creates a play list of songs (120) and said item is a song from a group of songs accessible by said mobile device (10), and wherein said play list (126) comprises said song and is capable of adding additional songs thereto.

## Amended claims

### Amended claims in accordance with Rule 137(2) EPC.

**1.** A method for adding an item from a group of one or more items (40) stored on a mobile device (10) to a feature (63, 110, 120) created for said mobile device (10) comprising:
- during creation of said feature (63, 110, 120) displaying an input mechanism (78, 178, 278) on said mobile device (10) for entering one or more identifiers associated with a desired item from said group of one or more items (40) stored on said mobile device (10); and
- upon entry of said one or more identifiers, comparing said one or more identifiers with said group of one or more items (40) to match selected ones of said group of one or more items with said one or more identifiers, and displaying on said mobile device (10) in the same display as said input mechanism (78, 178, 278), a filtered list (79) indicative of a sub-list (79) of items comprising said selected ones of said group of one or more items (40);
wherein selection of said desired item from said sub-list (79) adds said desired item to said feature (63, 110, 120) without requiring a separate menu.

**2.** A method according to claim 1 wherein said item is a contact and said group of one or more items (40) is group of one or more contacts.

**3.** A method according to any claim 1 or claim 2 wherein said input mechanism is an entry box (78, 178, 278) and said one or more identifiers comprise characters intended to be associated with said desired item.

**4.** A method according to claim 3 wherein when said entry box (78, 178, 278) is empty and said entry box (78, 178, 278) is selected, said sub-list (79) is equivalent to a list containing all items in said group of one or more items (40).

**5.** A method according to any one of claims 1 to 4 wherein said feature creates an exception (63) for an active profile (54) for said device (10) and said desired item is a contact intended to be associated with said exception.

**6.** A method according to claim 5 wherein said active profile (54) comprises one or more options related to the manner in which said mobile device (10) alerts a user upon receiving a communication from said contact.

**7.** A method according to claim 6 wherein said one or more options is any one or any combination of a ring type, a notification message, an alarm, a vibration, and/or a suppression of one or more alerts associated with said active profile (54).

**8.** A method according to any one of claims 1 to 7 wherein said feature creates a new group of contacts (110) and said item is a contact from a group of one or more contacts (40), and wherein said new group comprises said contact and is capable of adding additional contacts thereto.

**9.** A method according to claim 8 wherein said new group of contacts is for an email option.

**10.** A method according to any one of claims 1 to 9 wherein said feature creates a play list of songs (120) and said item is a song from a group of one or more songs accessible by said mobile device (10), and wherein said play list (126) comprises said song and is capable of adding additional songs thereto.

**11.** A computer program product comprising computer readable instructions for causing a computing device to perform the steps of the method of any one of claims 1 to 10.

**12.** A mobile device (10) comprising a display (12), a processor (238), and a memory (224) storing at least one computer-based application, said processor (238) being configured for creating a feature for said mobile device (10) and adding an item from a group of one or more items (40) stored on said mobile device (10) to said feature in said application by:
- displaying an input mechanism (78, 178, 278) on said mobile device (10) during creation of said feature for entering one or more identifiers associated with a desired item from said group of one or more items (40) stored on said mobile device (10); and
- displaying a sub-list (79) on said mobile device (10) in the same display as said input mechanism (78, 178, 278), upon selection of said input mechanism (78, 178, 278) and entry of at least one of said one or more identifiers, comparing said one or more identifiers with said group of one or more items (40), to match selected ones of said group of one or more items with said one or more identifiers, said sub-list (79) comprising a filtered list indicative of items comprising said selected ones of said group of one or more items (40);
wherein selection of said desired item from said sub-list (79) adds said desired item to said feature without requiring a separate menu.

**13.** A mobile device (10) according to claim 12 wherein said item is a contact and said group of one or more items (40) is a group of one or more contacts.

**14.** A mobile device (10) according to claim 12 or claim 13 wherein said input mechanism (78, 178, 278) is an entry box and said one or more identifiers comprise characters intended to be associated with said desired item.

**15.** A mobile device (10) according to claim 14 wherein said processor (238) is configured such that when said entry box (78, 178, 278) is empty and said entry box is selected, said sub-list (79) is equivalent to a list containing all items in said group of one or more items (40).

**16.** A mobile device (10) according to any one of claims 12 to 15 wherein said processor (238) is configured for creating said feature such that said feature creates an exception (63) for an active profile (54) for said device (10) and said desired item is a contact intended to be associated with said exception.

**17.** A mobile device (10) according to claim 16 wherein said active profile (54) comprises one or more options related to the manner in which said mobile device (10) alerts a user upon receiving a communication from said contact.

**18.** A mobile device (10) according to claim 17 wherein said one or more options is any one or any combination of a ring type, a notification message, an alarm, a vibration, and/or a suppression of one or more alerts associated with said active profile (54).

**19.** A mobile device (10) according to any one of claims 13 to 18 wherein said processor (238) is configured for creating said feature such that said feature creates a new group of contacts (110) and said item is a contact from said group of one or more contacts (40), and wherein said new group comprises said contact and is capable of adding additional contacts thereto.

**20.** A mobile device (10) according to claim 19 wherein said new group of contacts is for an email option.

**21.** A mobile device (10) according to any one of claims 12 to 20 wherein said processor (238) is configured for creating said feature such that said feature creates a play list of songs (120) and said item is a song from a group of one or more songs accessible by said mobile device (10), and wherein said play list (126) comprises said song and is capable of adding additional songs thereto.
